**Europäisches Patentamt**

**European Patent Office**

**Office européen des brevets**

(19)

(11) Veröffentlichungsnummer: **0 093 991**
**B1**

(12)

# EUROPÄISCHE PATENTSCHRIFT

(45) Veröffentlichungstag der Patentschrift:
06.11.85

(21) Anmeldenummer: 83104274.2

(22) Anmeldetag: 02.05.83

(51) Int. Cl.⁴: **A 01 D 41/12**

(54) **Körnerverlust-Messvorrichtung für Mähdrescher.**

(30) Priorität: 07.05.82 US 375894

(43) Veröffentlichungstag der Anmeldung:
16.11.83 Patentblatt 83/46

(45) Bekanntmachung des Hinweises auf die Patenterteilung:
06.11.85 Patentblatt 85/45

(84) Benannte Vertragsstaaten:
DE FR GB IT

(56) Entgegenhaltungen:
DE - A - 2 632 507
US - A - 3 935 866
US - A - 4 000 398

(73) Patentinhaber: DEERE & COMPANY, 1 John Deere
Road, Moline Illinois 61265 (US)

(72) Erfinder: Denning, Barry Kent, Rt. 1, Box 34, Woodhull
Illinois 61490 (US)
Erfinder: Ziegler, Duane Herbert, 1109 Melodie Lane
Level Acres, Colona Illinois 61241 (US)

(74) Vertreter: Sartorius, Peter et al, DEERE & COMPANY
European Office, Patent Department
Postfach 503 Steubenstrasse 36-42,
D-6800 Mannheim 1 (DE)

## Beschreibung

Die Erfindung bezieht sich auf eine Körnerverlust-Messvorrichtung für eine Dresch- und Trennvorrichtung, einen Hordenschüttler oder für die Siebe einer Reinigungsvorrichtung von Mähdreschern mit mindestens einem im Bereich des Strohabgabeendes des Hordenschüttlers oder am hinteren Ende der Reinigungsvorrichtung vorgesehenen Sensor, der über elektrische Leitungen mit einer am Fahrerstand angeordneten Anzeigevorrichtung verbunden ist.

Es ist bereits eine Körnerverlust-Messvorrichtung für Mähdrescher bekannt (US-PA Nr. 4000398), die aus zwei am Ende des Hordenschüttlers und der Reinigungsvorrichtung angeordneten Sensoren besteht, die die einzelnen Körner mittels einer Sensorplatte erfassen, so dass beim Aufprall des entsprechenden Korns ein Signal ausgelöst wird, das über eine elektrisch beeinflussbare Stellvorrichtung Einfluss auf die Arbeitsgeschwindigkeit des Mähdreschers nimmt. Die einzelnen Sensoren sind fest und ungeschützt im Mähdrescher angeordnet, so dass sie leicht beschädigt werden können und ausserdem auch Strohanteile erfassen, die somit eine Fehlmessung an den Sensoren hervorrufen können. Wartungsarbeiten an der Reinigungsvorrichtung bzw. am Hordenschüttler werden dadurch erschwert, dass die Sensoren fest am Hordenschüttler bzw. an der Reinigungsvorrichtung angeordnet sind.

Demgegenüber liegt der Erfindung die Aufgabe zugrunde, die Körnerverlust-Messvorrichtung so auszubilden und anzuordnen, dass neben einer einfachen und schnellen Montage der Vorrichtung auch ohne vollständige Entfernung dieser Vorrichtung Wartungsarbeiten im Bereich der Sensoren möglich sind. Diese Aufgabe wird dadurch gelöst, dass der Sensor auf einer verschwenkbaren Halterung angeordnet ist, die über in vertikaler und horizontaler Richtung, in am Mähdrescher vorgesehene Ausnehmungen einführbare Rastelemente sicherbar sind. Durch die vorteilhafte Ausbildung der einzelnen Sensoren lassen sich diese ohne weiteres am Ende des Hordenschüttlers bzw. der Reinigungsvorrichtung in kürzester Zeit montieren, da diese mittels der entsprechenden Rastelemente in die zugehörigen Ausnehmungen eingesetzt werden können, so dass auf Arbeitswerkzeuge zur Montage der Sensoren verzichtet werden kann. Durch die Verschwenkmöglichkeit der zugehörigen Halterung der Sensoren lassen sich diese auch so weit am Hordenschüttler bzw. der Reinigungsvorrichtung verstellen, dass auch bei teilweise angebautem Sensor eine Wartungsarbeit im Bereich des Endes des Hordenschüttlers bzw. der Reinigungsvorrichtung möglich ist. Soll jedoch der einzelne Sensor vollständig entfernt werden, so braucht das entsprechende Rastelement lediglich aus der zugehörigen Ausnehmung herausgeführt zu werden, um dann vom Mähdrescher entfernt werden zu können. Hierzu ist es vorteilhaft, dass die Rastelemente als in am Mähdrescher vorgesehene Ausnehmungen einführbare Haken bzw. Nasen und federbelastete Arretierungsbolzen ausgebildet sind, die in der Endlagestellung der Halterung selbsttätig in eine Arretierungsstellung bringbar sind. Durch die Verwendung von Haken bzw. Nasen zum Einführen in die entsprechenden Ausnehmungen wird eine schnelle Montage der Sensoren an den entsprechenden Vorrichtungsteilen wesentlich erleichtert.

In weiterer Ausgestaltung der Erfindung ist es vorteilhaft, dass eine Abdeckvorrichtung aus einem unterhalb des hinteren Endes des Hordenschüttlers vorgesehenen Boden mit aufrecht stehenden Flanschen bzw. Schenkeln besteht, die derart angeordnet sind, dass das hintere Ende des Sensors für den Hordenschüttler bzw. die Reinigungsvorrichtung gegen Beschädigungen geschützt ist, wobei der Boden mit einer Einbuchtung zur Aufnahme der den Sensor mit der Anzeigevorrichtung verbindenden Leitung versehen ist, wobei die Abdeckvorrichtung über manuell lösbare Befestigungselemente an die Reinigungsvorrichtung bzw. an den Hordenschüttler angeschlossen sein kann. Durch Verwendung einer Abdeckvorrichtung können alle wesentlichen Bauteile zur Erfassung des Körnerverlustes ausreichend vor Beschädigungen geschützt werden, ohne dass dadurch die An- und Abbauzeit der Sensoren vergrössert wird. Da an der Halterung oberhalb und seitlich des Sensors vorgesehene aufrecht stehende Leitelemente vorgesehen sind, die als Verlust ausgeworfene Erntegut dem Sensor zuführen, wird eine einwandfreie Erfassung der Körner ermöglicht, die über das Austragende des Hordenschüttlers bzw. der Reinigungsvorrichtung bewegt werden. Durch die Verwendung einer gitterartigen Schutzvorrichtung bzw. eines Gitters oberhalb des Sensors wird verhindert, dass Stroh bzw. Kaffteile auf den Sensor gelangen. Dadurch können Fehlmessungen ausgeschaltet werden.

Gemäss der Erfindung ist es ferner vorteilhaft, dass ein jeder Sensor einen elektrischen Anschluss aufweist, der mit einem am Austragende des Hordenschüttlers bzw. des Siebes der Reinigungsvorrichtung vorgesehenen elektrischen Anschlussteil kuppelbar ist, der über die elektrische Leitung mit der Anzeigevorrichtung verbunden ist. Durch Verwendung von Kupplungsteilen zur Verbindung der einzelnen Anschlüsse kann die Montagezeit für den Sensor weiter herabgesetzt werden. Gleichzeitig können die Anschlüsse zur Verbindung der elektrischen Leitung so ausgebildet sein, dass durch Einschwenken der Halterung zur Aufnahme des Sensors automatisch die beiden Anschlüsse zusammengefügt werden. Da der Sensor auf dem nach hinten geneigt verlaufenden Boden angeordnet ist und der Haken am oberen und der elektrische Anschluss am unteren Teil der Halterung vorgesehen ist, wird das erfasste Erntegut ohne weiteres nach unten abgeführt, so dass lediglich der erste Aufprall des Erntegutes auf der Oberfläche des Sensors erfasst wird. Dabei ist es vorteilhaft, dass der Anschluss beim Einschwenkvorgang der Halterung automatisch mit dem als Gegenstück ausgebildeten Anschluss kuppelbar ist und dabei eine in etwa horizontal verlaufende Lage einnimmt. Ferner ist es vorteilhaft, dass an der Vorrichtung zur Abdeckung des elektrischen Kabels der die Rückseite des Sensors abdeckende Flansch angeordnet ist. Durch die Verwendung eines Flansches an der Rückseite des Sensors wird insbesondere an der Stelle ein einwandfreier Schutz für den Sensor geschaffen, die am ehesten Fremdeinwirkungen ausgesetzt ist.

In weiterer Ausgestaltung der Erfindung ist es vorteilhaft, dass die am oberen Teil der Halterung angeordnete Nase in eine am Sieb vorgesehene Ausnehmung einsteckbar ist und die Halterung beim Schwenkvorgang von einer Montagestellung in eine Arbeitsstellung trägt, während der federbelastete Arretierungsbolzen in Ösen verschiebbar aufgenommen ist und beim Einschwenkvorgang automatisch in seine Arretierungsstellung bringbar ist. Vorteilhaft ist es ferner, dass an der Halterung ein nach vorne stehendes Kupplungsteil bzw. ein Dorn vorgesehen ist, der bei Montage der Halterung mit einem Gegenstück zusammenfügbar ist. Durch die Verwendung eines Kupplungsteiles bzw. eines Dornes, das mit einem entsprechenden Gegenstück kuppelbar ist, lässt sich beim Einschwenken der Halterung zur Aufnahme des Sensors ein genaues Ausrichten des Sensors bzw. der zugehörigen Halterung sicherstellen. Hierzu ist es ferner vorteilhaft, dass die Halterung aus einem in etwa vertikal verlaufenden Schenkel besteht, an der der nach hinten geneigt verlaufende Schenkel zur Aufnahme des Sensors freitragend angeordnet ist und die gesamte Breite des Sensors überspannt. Vorteilhaft ist es ausserdem, dass die gitterartige Schutzvorrichtung den Raum zwischen dem vertikalen Schenkel und der äusseren Begrenzung des Sensors abdeckt und dass die Reinigungsvorrichtung jeweils im Bereich der Seitenwand des Siebes einen Sensor aufweist. Ferner ist es vorteilhaft, dass die Ausnehmung zur Aufnahme des Arretierungsbolzens als Schlitz ausgebildet ist, der in vertikal verlaufenden, gegenüberliegenden Schenkeln der Halterung angeordnet ist, wobei die Schenkel in der Arbeitsstellung seitlich gegen die den Arretierungsbolzen aufnehmenden Ösen anliegen. Die einzelnen Schenkel der Halterung können so angeordnet sein, dass diese fest am Hordenschüttler bzw. an der Abdeckvorrichtung angeordnet sind und nicht an dem entsprechenden Sensor, so dass dieser nach Lösen ohne weiteres aus den Schenkeln herausgeschwenkt werden kann, um dann den Haken aus der entsprechenden Ausnehmung herauszuführen. Die gitterartige Schutzvorrichtung stellt sicher, dass nur Erntegutteile und keine Strohanteile bzw. Kaffanteile auf den Sensor gelangen. Ausserdem verhindert die Schutzvorrichtung anderweitige Beschädigungen des Sensors. Da sich das Erntegut mitunter an der Aussenseite der Siebe der Reinigungsvorrichtung ansammelt, ist es vorteilhaft, dass die entsprechenden Sensoren im Bereich der Seitenwände der Siebe vorgesehen sind. Um Fertigungstoleranzen auszugleichen, ist es vorteilhaft, wenn der Arretierungsbolzen zur Sicherung der Halterung des Sensors in eine Langlochöffnung einrastet. Durch die Verwendung des Arretierungsbolzens wird die Zeit für die Schnellmontage des Sensors am Mähdrescher weiterhin verkürzt.

In der nachfolgenden Beschreibung ist ein Ausführungsbeispiel einer Verlustmessvorrichtung für einen Mähdrescher nach der Erfindung schematisch dargestellt. Es zeigt

Fig. 1 eine Seitenansicht eines Mähdreschers mit der erfindungsgemässen Verlustmessvorrichtung,

Fig. 2 eine Rückansicht des hinteren Endes des Hordenschüttlers mit der erfindungsgemässen Messvorrichtung,

Fig. 3 einen Schnitt entlang der Linie 3 - 3 gemäss Fig. 2,

Fig. 4 eine Teilansicht in der Sicht entlang der Linie 4 - 4 gemäss Fig. 3,

Fig. 5 eine Teilansicht entlang der Linie 5 - 5 gemäss Fig. 4,

Fig. 6 das hintere Ende des Hordenschüttlers mit der erfindungsgemässen Messvorrichtung,

Fig. 7 eine Rückansicht entlang der Linie 7 - 7 gemäss Fig. 6.

In der Zeichnung ist mit 10 die Fahrerkabine eines Mähdreschers bezeichnet, der in seinem Mähdreschergehäuse 14 eine nach dem Querflussprinzip arbeitende Dreschtrommel 12 mit einem Dreschkorb aufweist, an den sich ein Hordenschüttler 16 anschliesst. Das Austragende 18 des Hordenschüttlers 16 wird von dem hinteren Teil 20 des Mähdreschergehäuses 14 umgeben. Unterhalb des Dreschkorbes und des Hordenschüttlers 16 befindet sich eine aus mehreren Förderschnekken gebildete Fördervorrichtung 22, die ausgeschiedenes Erntegut einer Siebe 24 und 28 aufweisenden Reinigungsvorrichtung 26 zuführt. Die Siebe 24 und 28 werden über ein Gebläse 30 mit Reinigungsluft versorgt. Das gereinigte Erntegut gelangt über einen Elevatorförderer 34 in einen Sammelbehälter 32. Das ausgedroschene Stroh wird über den hinteren Teil 20 des Mähdreschergehäuses 14 einem Häckselgehäuse 40 zugeführt, in dem ein Rotor 38 mit Häckselwerkzeugen 36 angeordnet ist. Über die Häckselwerkzeuge 36 wird das Stroh zerkleinert und dann auf den Boden abgelegt.

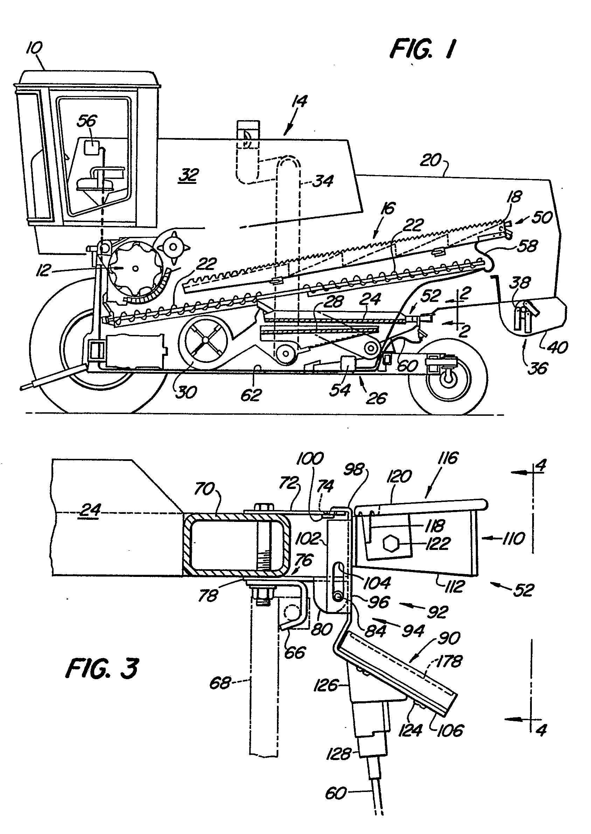

Die Plazierung einer Körnerverlust-Messvorrichtung geht aus Fig. 1 hervor. Zu der Körnerverlust-Messvorrichtung gehört ein Sensor 50, der am Hordenschüttler 16 vorgesehen ist, sowie ein Sensor 52, der am hinteren Ende der Reinigungsvorrichtung 26 angeordnet ist. Ferner weist die Körnerverlust-Messvorrichtung keinen Vorverstärker 54 mit einem Filterelement auf, der über einen entsprechenden Stromkreis an eine in der Fahrerkabine 10 vorgesehene Anzeigevorrichtung 56 angeschlossen ist. Der Vorverstärker 54 mit dem zugehörigen Filter ist so nah wie möglich an die beiden Sensoren 50 und 52 angeschlossen, um die bestmöglichen Messergebnisse aufzunehmen und diese an die Anzeigevorrichtung 56 zu leiten. Die Anzeigevorrichtung 56 ist hierzu über entsprechende Elektroleitungen 58 und 60 mit den Sensoren 50 und 52 verbunden.

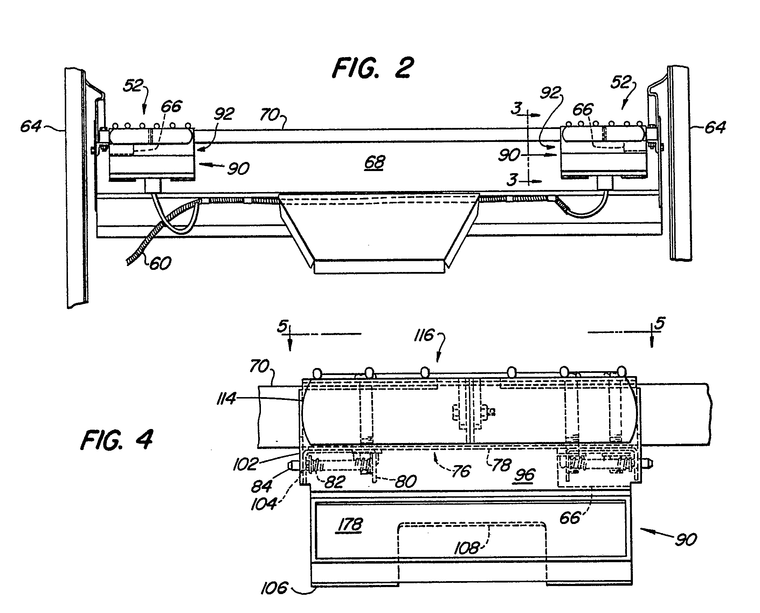

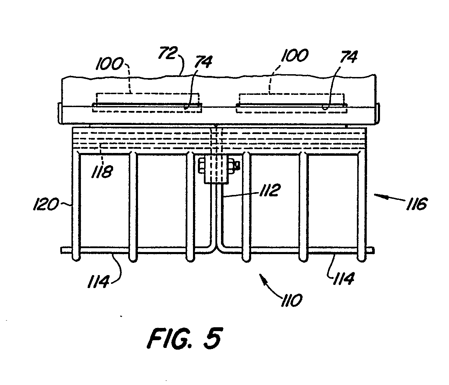

Die spezielle Anordnung des Sensors 52 ist im Detail in den Fig. 2 bis 5 veranschaulicht. In Fig. 2 ist zum Teil das hintere Ende der Reinigungsvorrichtung 26 dargestellt. Zwei Sensoren 52 sind im Bereich der vertikal verlaufenden Seitenwand 64 des Siebes 24 angeordnet. Siebverluste sind im Bereich der äusseren Kanten der Siebe normalerweise höher. Die Erfassung der Verluste ergibt somit eine realistische Wiedergabe des Gesamtverlustes der Siebe, so dass die Plazierung der Sensoren 52 im Bereich der Seitenwände 64 besonders vorteilhaft ist. Wie aus den Fig. 2 und 3 hervorgeht, kann es auch vorteilhaft sein, in diesem Bereich Laschen 66 bzw. Siebklappen 68 vorzusehen.

Ein jeder Sensor 52 ist über eine Halterung 94 an einem am hinteren Ende des Siebes 24 vorgesehenen Querträger 70 befestigt (Fig. 3). Die Halterung 94 zur Aufnahme des Sensors 52 besteht aus zwei parallel zueinander verlaufenden Platten 72, die am Querträger 70 befestigt sind. Die obere Platte 72 weist zwei quer verlaufende Schlitze 74 und eine untere Sensor-Befestigungseinrichtung 76 auf. An der Sensor-Befestigungseinrichtung 76 ist eine Halterung 78 mit einer Öse 80 angeordnet. In eine jede Öse 80 rastet ein über eine Feder 82 verstellbarer Arretierungsbolzen 84 ein. Über die Feder 82 wird der Arretierungsbolzens 84 seitlich nach aussen verstellt, so dass er in die entsprechende Öse 80 der Befestigungseinrichtung 76 einrasten kann.

Eine Sensorplatte 90 des Sensors 50 ist an einer Befestigungseinrichtung 92 angeordnet, die aus der Halterung 94 und einem vertikal verlaufenden Schenkel 96 gebildet ist. Das obere Ende des Schenkels 96 weist einen horizontal verlaufenden Steg 98 mit einem Haken 100 auf, der in den entsprechenden Schlitz 74 einrastbar ist. An den beiden aussen liegenden Stirnkanten des Schenkels 96 sind vertikal verlaufende, sich nach vorne erstreckende Schenkel 102 angeordnet, die die Befestigungseinrichtung 76 umgeben. Ein jeder Schenkel 102 weist an seinem unteren Ende einen vertikal verlaufenden Längsschlitz 104 auf, der zur Aufnahme des Arretierungsbolzens 84 der Sensor-Befestigungseinrichtung 76 dient. Ein nach hinten und unten geneigter Schenkel 106 ist mit einer relativ grossen Aussparung 108 versehen, die in Fig. 4 in gestrichelten Linien angedeutet ist. Der Schenkel 106 ist mit dem Schenkel 96 fest verbunden.

Eine Leitvorrichtung 110 ist beispielsweise über Punktschweissung oder auf ähnliche Weise an die Rückseite des Schenkels 96 (Fig. 3) angeschlossen. Die Leitvorrichtung 110 weist ein hinteres, vertikal verlaufendes Stegteil 112 auf, das sich von dem Schenkel 96 nach hinten erstreckt und an dem quer verlaufende rechte und linke Wandteile 114 angeschlossen sind. Das Stegteil 112 bildet mit den beiden Wandteilen 114 eine T-Form. Im oberen Bereich der Leitvorrichtung 110 ist ein aus einem Rahmen 118 und Fingern 120 gebildetes Gitter 116 vorgesehen. Die einzelnen Finger 120 sind mit Abstand zueinander angeordnet und einenends mit dem Rahmen 118 verbunden und anderenends bis an die Wandteile 114 herangeführt. Somit überspannen die einzelnen Finger 120 den Zwischenraum zwischen dem Rahmen 118 und den Wandteilen 114. Die Sensorplatte 90 ist, wie bereits erwähnt, auf dem geneigt verlaufenden Schenkel 106 angeordnet und kann, wie aus Fig. 3 hervorgeht, über entsprechende Befestigungselemente an diesem befestigt sein. Auf der Rückseite der Sensorplatte 90 befindet sich ein elektrischer Anschluss 126 zur Aufnahme eines elektrischen Anschlusteiles 128 der elektrischen Leitung 60.

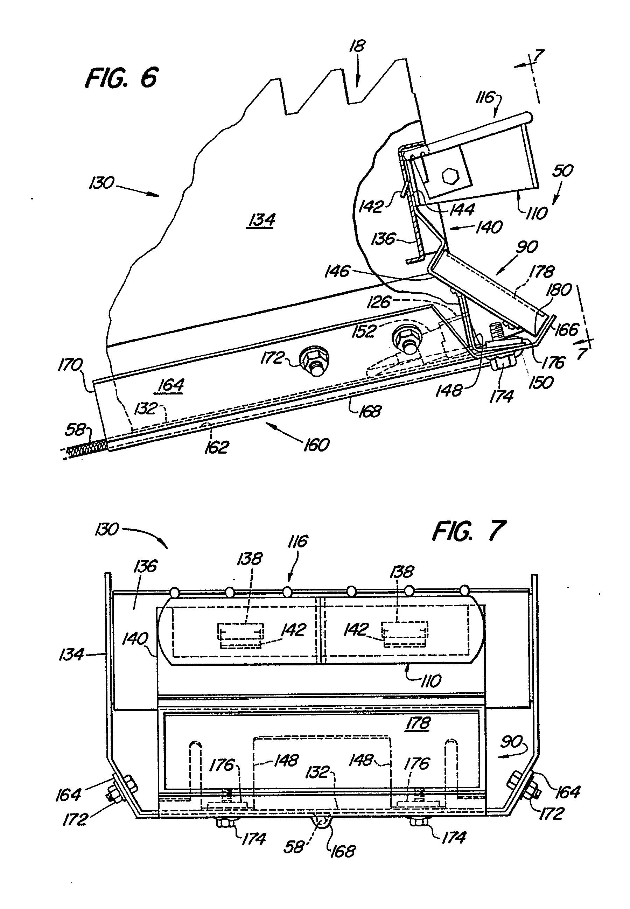

Die einzelnen Sensoren 50 für den Hordenschüttler 16 sind ebenfalls paarweise am Ende einer jeden Horde vorgesehen. Im Ausführungsbeispiel ist der Hordenschüttler 16 mit vier Horden ausgerüstet. Es wäre jedoch möglich, den Hordenschüttler grösser oder kleiner auszubilden. Eine jede Horde ist in einem derartigen Fall mit mindestens einem Sensor ausgerüstet. In Fig. 6 und 7 ist das rückwärtige Ende einer Horde 130 des Horden-schüttlers 16 dargestellt. Die Horde 130 ist kastenförmig ausgebildet und besteht hierzu aus einem Boden 132 sowie zwei gegenüberliegenden, parallel zueinander verlaufenden Seitenwänden 134. Am rückwärtigen Ende der Seitenwände 143 befindet sich ein Quersteg 136, der die beiden Seitenwände 134 miteinander verbindet. Der Quersteg 136 ist mit quer verlaufenden Schlitzen 138 versehen. Wie aus Fig. 6 und 7 hervorgeht, ist die Sensorplatte 90 über eine Halterung 140 ähnlich wie die Halterung 94 am hinteren Ende der Horde 130 befestigt. An der Halterung ist ferner die Leitvorrichtung 110 mit dem Gitter 116 befestigt. Die Halterung 140 weist zwei Hakenteile 142 auf, die über einen Stegteil mit einer Tragvorrichtung 146 verbunden sind. Der Stegteil der Halterung 140 liegt gegen eine vertikal verlaufende Wand 144 der Horde 130 an. Die Tragvorrichtung 146 ist mit einer Aussparung bzw. einer Einbuchtung versehen, um einen entsprechenden Freiraum zur Aufnahme des Anschlusses 126 zu gewährleisten. Die Tragvorrichtung 146 ist ferner mit einer Winkelhalterung 148 ausgerüstet, die aus einem vertikal und aus einem horizontal verlaufenden Schenkel 150 besteht, der in etwa auf der gleichen Ebene wie der Boden 132 des Hordenschüttlers 16 liegt. Im Ausführungsbeispiel ist die Sensorplatte 90 so angeordnet, dass der Anschluss 126 sich horizontal nach vorne erstreckt, so dass eine Beschädigung des Anschlusses vermieden wird. Mit dem Anschluss 126 ist ferner ein Anschlussteil 152 der elektrischen Leitung verbunden.

Die Körnerverlust-Messvorrichtung ist über eine Abdeckvorrichtung 160 geschützt. Die Abdeckvorrichtung 160 besteht aus einem geneigt verlaufenden Boden 162 sowie sich daran anschliessenden, vertikal verlaufenden Schenkeln 164, aus einem nach hinten und oben geneigt verlaufenden Flansch 166 und aus einer mittleren Aussparung 168, die im Bereich des Endes des Flansches 166 vorgesehen ist. Das vordere Ende der Abdeckvorrichtung 160 weist eine quer verlaufende Kante 170 auf.

Damit eine leichtere Montage des Sensors 50 möglich ist, erfolgt eine Vormontage, wobei zuerst die Sensorplatte 90 und dann das Gitter 116 auf der Befestigungseinrichtung 92 montiert werden.

Diese vormontierte Baugruppe wird dann an das hintere Ende des Querträgers 70 befestigt, wobei die Baugruppe so gekippt wird, dass die Haken 100 in die Schlitze 74 der Platte 72 einrasten können. Danach wird die Baugruppe nach unten geschwenkt, bis die Schenkel 102 gegen die Arretierungsbolzen 84 zur Anlage kommen und diese so weit nach hinten verschieben, dass diese bis an die Schlitze 104 herangeschwenkt werden können, in die sie über die Feder 82 eingerastet werden (Fig. 3, Fig. 4). Die Sensorplatte 90 muss so genau auf dem Schenkel 106 ausgerichtet werden, dass der Anschluss 126 genau zum Anschlussteil 128 der elektrischen Leitung 60 ausgerichtet ist, so dass keine Beschädigungen an diesen Teilen auftreten, wenn die Baugruppe in ihre Arbeitsstellung verschwenkt wird. Bei diesem Schwenkvorgang können die beiden Anschlussteile 126 und 128 miteinander gekuppelt werden. Die elektrischen Leitungen 60 sind so verlegt, dass ohne weiteres eine schwingende Bewegung der Siebe 24 im Mähdreschergehäuse 14 möglich ist.

Eine ähnliche Körnerverlust-Messvorrichtung ist auch für die Hordenschüttler 16 vorgesehen. Die vormontierte Baugruppe der Körnerverlust-Messvorrichtung wird gemäss Fig. 6 gegen den Quersteg 136 zur Anlage gebracht, und die Hakenteile 142 rasten dabei in die Schlitze 138 ein, wobei die gesamte Baugruppe nach unten bewegt wird. In der Endlagestellung der Baugruppe nimmt der Anschluss 126 eine in etwa horizontal verlaufende Lage (siehe Fig. 6) ein. Der Anschlussteil 152 der elektrischen Leitung 58 wird dabei über dem Bereich der hinteren Kante des Bodens 132 bewegt, bis er mit dem Anschluss 126 zusammengefügt worden ist. Danach wird die Abdeckvorrichtung 160 in die Lage gemäss Fig. 6 gebracht, wobei darauf geachtet werden muss, dass die elektrischen Leitungen 58 in die Aussparung 168 des Bodens 162 unterhalb des Bodens 132 gelangen (siehe Fig. 7). Wie aus Fig. 6 hervorgeht, erstreckt sich die elektrische Leitung 58 über die Kante 170 der Abdeckvorrichtung 160. Die Abdeckvorrichtung 160 kann über Schraubenbolzen 172 befestigt werden. Die gesamte Körnerverlust-Messvorrichtung wird dann über einen Schraubenbolzen 174 und eine entsprechende, am Schenkel 150 angeschweisste Mutter 176 an der Halterung 140 befestigt. Wie aus Fig. 6 hervorgeht, sind die einzelnen Teile so dimensioniert und ausgebildet, dass ein fester Sitz gewährleistet ist, wobei der Schraubenbolzen 174 die Halterung 140 nach unten etwas abbiegt, so dass die Haken 142 fest in ihren Schlitzen 138 gesichert sind.

Im Arbeitseinsatz arbeiten die beiden Körnerverlust-Messvorrichtungen auf gleiche Weise. Wird ein Teil des Erntegutes über das Austragende des Hordenschüttlers 16 bzw. des Siebes 24 abgegeben, so gelangt es auf die Oberfläche 178, und der Sensor 50 erzeugt in Abhängigkeit von der Erntegutmenge ein Signal, das den Körnerverlust im Sieb bzw. im Hordenschüttler angibt. Wie aus Fig. 3 bzw. 6 hervorgeht, ist der nach hinten geneigt verlaufende Schenkel 106 zur Aufnahme der Sensorplatte 90 freitragend angeordnet und nach oben hin offen, so dass das auf die Sensorplatte 90 auftreffende Erntegut ohne weiteres über die Sensorplatte bzw. den Schenkel 106 nach hinten abgleiten kann. Ebenso können Stroh bzw. Kaffanteile ohne weiteres von der Sensorplatte 90 abgeführt werden. Dies ist insbesondere dann wichtig, wenn die Körnerverlust-Messvorrichtung ohne entsprechendes Gitter 116 ausgerüstet ist, das als Zusatzeinrichtung am hinteren Ende des Hordenschüttlers 16 bzw. des Siebes 24 vorgesehen ist und verhindert, dass Strohteile auf die Sensorplatte 90 gelangen. Die Körnerverlust-Messvorrichtung für den Hordenschüttler 16 ist insbesondere beim Maisernten von Vorteil, besonders dann, wenn mit einem Häckselwerkzeug 36 gearbeitet wird. Maiskörner sind relativ gross und weisen einen relativ harten Kern auf. Wandern Maiskörner über das hintere Ende des Hordenschüttlers, so werden sie von den Rotoren 38 der Häckselvorrichtung erfasst, so dass sie dann nach oben geschleudert werden und auf den Sensor 50 gelangen. Somit weist die Abdeckvorrichtung 160 gleichzeitig mehrere Funktionen auf. Einmal dient sie als Schutzvorrichtung für die hintere Kante 180 des Sensors 50 und zum anderen als Schutz für die elektrische Leitung 58 sowie den Anschluss 126. Ausserdem dient die Abdeckvorrichtung 160 auch als Anschlussstelle für den unteren Teil der Halterung 140. Durch diese vorteilhafte Ausbildung und Anordnung der Abdeckvorrichtung 160 sowie der zugehörigen Körnerverlust-Messvorrichtung erhält man eine einwandfrei funktionierende Vorrichtung, da sie für alle Erntegutarten einwandfrei geschützt ist und beim Erntevorgang stets die gewünschte Lage beibehält, ohne dass dabei die Häckselvorrichtung 36 eine Störgrösse an dem Sensor 50 erzeugt. Somit ist die Bedienungsperson auch nicht gezwungen, den Sensor in Abhängigkeit der unterschiedlichen Erntebedingungen an- und abzubauen. Somit steht die Körnerverlust-Messvorrichtung immer dann zur Verfügung, wenn sie auch gebraucht wird.

Die Arbeits- und Umweltbedingungen für die Sensoren 52 sind im allgemeinen günstig, so dass eventuelle mechanische Beschädigungen bei normalen Arbeiten gering sind. Jedoch gibt es einige Arbeiten, die die Bedienungsperson ausführen muss, bei denen die Sensoren im Bereich des hinteren Endes der Siebe ein Hindernis sein können. Zu diesen Arbeiten gehört auch die Entfernung der Siebe 24 bzw. 28, um z.B. Verstopfungen zu beseitigen bzw. den Zugang zur Klappe 68 bzw. den Laschen zu ermöglichen oder das Sieb entsprechend einzustellen bzw. zu reinigen. Sollte dies aus irgendeinem Grund notwendig sein, so muss der Sensor 52 für das Sieb 24 leicht und schnell ohne Verwendung von Arbeitswerkzeugen entfernt bzw. verschwenkt werden. Hierzu braucht lediglich der Arretierungsbolzen 84 manuell zur Seite gedrückt zu werden, so dass die Körnerverlust-Messvorrichtung nach hinten und oben verschwenkt werden kann, um somit den Haken 100 lösen bzw. herausnehmen zu können, jedoch bevor der elektrische Anschluss 128 vom elektrischen Anschluss 126 gelöst worden ist.

9  0 093 991  10

**Patentansprüche**

1. Körnerverlust-Messvorrichtung für eine Dresch- und Trennvorrichtung, einen Hordenschüttler (16) oder für die Siebe (24) einer Reinigungsvorrichtung (26) von Mähdreschern mit mindestens einem im Bereich des Strohabgabeendes des Hordenschüttlers (16) oder am hinteren Ende der Reinigungsvorrichtung (26) vorgesehenen Sensor (50, 52), der über elektrische Leitungen (58, 60) mit einer am Fahrerstand (10) angeordneten Anzeigevorrichtung (56) verbunden ist, dadurch gekennzeichnet, dass der Sensor (50 bzw. 52) auf einer verschwenkbaren Halterung (94, 140) angeordnet ist, die über in am Mähdrescher vorgesehene Ausnehmungen (74, 104; 138) einführbare Rastelemente in vertikaler und horizontaler Richtung sicherbar sind.

2. Vorrichtung nach Anspruch 1, dadurch gekennzeichnet, dass die Rastelemente als in am Mähdrescher vorgesehene Ausnehmungen (74, 104; 138) einführbare Haken (100, 142) bzw. Nasen und federbelastete Arretierungsbolzen (84) ausgebildet sind, die in der Endlagestellung der Halterung (94) selbsttätig in eine Arretierungsstellung bringbar sind.

3. Vorrichtung nach Anspruch 1 und 2, dadurch gekennzeichnet, dass eine Abdeckvorrichtung (160) aus einem unterhalb des hinteren Endes des Hordenschüttlers (16) vorgesehenen Boden (162) mit aufrecht stehenden Flanschen bzw. Schenkeln (166) besteht, die derart angeordnet sind, dass das hintere Ende des Sensors (50) für den Hordenschüttler (16) gegen Beschädigungen geschützt ist, wobei der Boden (162) mit einer Einbuchtung (168) zur Aufnahme der den Sensor (50) mit der Anzeigevorrichtung (56) verbindenden Leitung (58) versehen ist, wobei die Abdeckvorrichtung (160) über manuell lösbare Befestigungselemente (172) an den Hordenschüttler (16) angeschlossen sein kann.

4. Vorrichtung nach einem oder mehreren der vorhergehenden Ansprüche, dadurch gekennzeichnet, dass an der Halterung (94) oberhalb und seitlich des Sensors (52) vorgesehene, aufrecht stehende Leitelemente (110) vorgesehen sind, die das als Verlust ausgeworfene Erntegut dem Sensor (52) zuführen, wobei oberhalb des Sensors (52) eine gitterartige Schutzvorrichtung (Gitter 116) vorgesehen ist, die verhindert, dass Stroh- bzw. Kaffteile auf den Sensor (52) gelangen.

5. Vorrichtung nach einem oder mehreren der vorhergehenden Ansprüche, dadurch gekennzeichnet, dass ein jeder Sensor (50, 52) einen elektrischen Anschluss (126) aufweist, der mit einem am Austragende des Hordenschüttlers (16) bzw. des Siebes (24) der Reinigungsvorrichtung vorgesehenen elektrischen Anschlussteil (128, 152) kuppelbar ist, der über die elektrische Leitung (58, 60) mit der Anzeigevorrichtung (56) verbunden ist.

6. Vorrichtung nach einem oder mehreren der vorhergehenden Ansprüche, dadurch gekennzeichnet, dass der Sensor (50) auf dem nach hinten geneigt verlaufenden Boden angeordnet ist und der Haken (142) am oberen und der elektrische Anschluss (126) am unteren Teil der Halterung (140) angeordnet ist, wobei der Anschluss (126) beim Einschwenkvorgang der Halterung (140) automatisch mit dem als Gegenstück ausgebildeten Anschluss kuppelbar ist und dabei eine in etwa horizontal verlaufende Lage einnimmt.

7. Vorrichtung nach einem oder mehreren der vorhergehenden Ansprüche, dadurch gekennzeichnet, dass an der Vorrichtung (160) zur Abdeckung des elektrischen Kabels (58) der die Rückseite des Sensors (50) abdeckende Flansch (166) angeordnet ist.

8. Vorrichtung nach einem oder mehreren der vorhergehenden Ansprüche, dadurch gekennzeichnet, dass die am oberen Teil der Halterung (94) angeordnete Nase (100) in eine am Sieb (24) vorgesehene Aussnehmung (74) einsteckbar ist und die Halterung beim Schwenkvorgang von einer Montagestellung in eine Arbeitsstellung trägt, während der federbelastete Arretierungsbolzen (84) in Ösen (80) verschiebbar aufgenommen ist und beim Einschwenkvorgang automatisch in seine Arretierungsstellung bringbar ist.

9. Vorrichtung nach einem oder mehreren der vorhergehenden Ansprüche, dadurch gekennzeichnet, dass an der Halterung (140) ein nach vorne stehendes Kupplungsteil bzw. ein Dorn vorgesehen ist, der bei Montage der Halterung (140) mit einem Gegenstück zusammenfügbar ist.

10. Vorrichtung nach einem oder mehreren der vorhergehenden Ansprüche, dadurch gekennzeichnet, dass die Halterung (94, 140) aus einem in etwa vertikal verlaufenden Schenkel (96) besteht, an der der nach hinten geneigt verlaufende Schenkel (106) zur Aufnahme des Sensors (50, 52) freitragend angeordnet ist und die gesamte Breite des Sensors überspannt.

11. Vorrichtung nach den Ansprüchen 4 und 9, dadurch gekennzeichnet, dass die gitterartige Schutzvorrichtung (Gitter 116) den Raum zwischen dem vertikalen Schenkel (96) und der äusseren Begrenzung des Sensors (50, 52) abdeckt.

12. Vorrichtung nach einem oder mehreren der vorhergehenden Ansprüche, dadurch gekennzeichnet, dass die Reinigungsvorrichtung (26) jeweils im Bereich der Seitenwand (64) des Siebes (24) einen Sensor (52) aufweist.

13. Vorrichtung nach einem oder mehreren der vorhergehenden Ansprüche, dadurch gekennzeichnet, dass die Aussparung zur Aufnahme des Arretierungsbolzens (84) als Schlitz (104) ausgebildet ist, der in vertikal verlaufenden, gegenüberliegenden Schenkeln (102) der Halterung (94) angeordnet ist, wobei die Schenkel in der Arbeitsstellung seitlich gegen die den Arretierungsbolzen (84) aufnehmenden Ösen (80) anliegen.

**Claims**

1. A grain loss measuring device for a treshing and separating apparatus, a walker-type shaker (16) or for the sieve (24) of a cleaning apparatus (26) of combine harvesters having at least one

6

sensor (50, 52) which is disposed in the region of the straw discharge end of the walker-type shaker (16) or at the downstream end of the cleaning apparatus (26) and which is connected by way of electrical lines (58, 160) to a display means (56) arranged at the driving position (10) characterized in that the sensor (50 or 52) is arranged on a pivotable mounting means (94, 140) which can be secured in a vertical and a horizontal direction by way of retaining elements which can be introduced into openings (74, 104; 138) provided on the combine harvester.

2. A device according to Claim 1 characterized in that the retaining elements are in the form of projections or hooks (100, 142) which can be introduced into openings (74, 104; 138) provided on the combine harvester, and spring-loaded arresting pins (84), which can be automatically brought into an arresting position in the limit position of the mounting means (94).

3. A device according to Claim 1 and Claim 2 characterized in that a cover means (160) comprises a bottom (162) disposed beneath the downstream end of the walker-type shaker (16) and having upstanding flangees or limb portions (166) which are so arranged that the trailing end of the sensor (50) for the walker-type shaker (16) is protected from damage, wherein the bottom (162) is provided with a recess (168) for accommodating the line (58) for connecting the sensor (50) to the display means (56), wherein the cover means (160) can be connected to the walker-type shaker (16) by way of manually releasable securing elements (172).

4. A device according to one or more of the preceding claims characterized by upstanding guide elements (110) which are provided on the mounting means (94) above and laterally of the sensor (52) and which feed the crop material which is ejected as waste to the sensor (52), wherein disposed above the sensor (52) is a grid-like protection means (grid 116) which prevents straw or chaff portions passing on to the sensor (52).

5. A device according to one or more of the preceding claims characterized in that each sensor (50, 52) has an electrical connection (126) which can be coupled to an electrical connecting member (128, 152) which is provided at the discharge end of the walker-type shaker (16) or the sieve (24) of the cleaning apparatus and which is connected to the display means (56) by way of the electric lead (58, 160).

6. A device according to one or more of the preceding claims characterized in that the sensor (50) is arranged on the bottom which extends inclinedly rearwardly and the hook (142) is arranged on the upper part of the mounting means (140) and the electrical connection (126) is arranged on the lower part of the mounting means (140), wherein upon the pivotal movement of the mounting means (140) into place the connection (126) can be automatically coupled to the connection which is formed as a co-operating member, and in so doing takes up a substantially horizontally disposed position.

7. A device according to one or more of the preceding claims characterized in that the flange (166) for covering the rear of the sensor (50) is arranged on the means (160) for covering the electric cable (58).

8. A device according to one or more of the preceding claims characterized in that the projection (100) arranged on the upper part of the mounting means (94) can be fitted into an opening (74) on the sieve (24) and carries the mounting means upon pivotal movement from an assembly position into an operative position while the spring-loaded arresting pin (84) is displaceably received in eyes (80) and can be automatically moved into its arresting position upon the pivotal movement occurring.

9. A device according to one or more of the preceding claims characterized in that provided on the mounting means (140) is a forwardly projecting coupling portion or a pin which, upon assembly of the mounting means (140), can be connected to a co-operating member.

10. A device according to one or more of the preceding claims characterized in that the mounting means (94, 140) comprises a substantially vertically extending limb portion (96) on which the rearwardly inclinedly extending limb portion (106) for carrying the sensor (50, 52) is disposed in cantilever relationship, and extends over the entire width of the sensor.

11. A device according to Claims 4 and 9 characterized in that the grid-like protective device (grid 116) covers the space between the vertical limb portion (96) and the outer boundary of the sensor (50, 52).

12. A device according to one or more of the preceding claims characterized in that the cleaning apparatus (26) has a respective sensor (52) in the region of each side wall (64) of the sieve (24).

13. A device according to one or more of the preceding claims characterized in that the opening for receiving the arresting pin (84) is formed as a slot (104) which is arranged in vertically extending mutually oppositely disposed limb portions (102) of the mounting means (94), wherein the limb portions in the operative position bear laterally against the eyes (80) accommodating the arresting pin (84).

## Revendications

1. Dispositif de mesure de la perte en grain pour un ensemble de battage et de séparation, un secoueur à éléments multiples (16) ou bien pour le crible (24) d'un ensemble de nettoyage (26) de moissonneuses-batteuses, comportant au moins un détecteur ou capteur (50, 52) prévu au voisinage de l'extrémité de sortie de la paille du secoueur à éléments multiples ou à l'extrémité arrière de l'ensemble de nettoyage (26), ce détecteur étant relié par des conducteurs électriques (58, 60) à un dispositif indicateur (56) prévu au poste de conduite (10), caractérisé en ce que le détecteur (50, 52) est disposé sur un support pouvant pivoter (94, 140), qui peut être immobilisé dans le sens vertical et dans le sens horizontal au moyen d'éléments d'encrantement pouvant être engagés dans des évidements (74, 104; 138) prévus sur la moissonneuse-batteuse.

2. Dispositif suivant la revendication 1, caractérisé en ce que les éléments d'encrantement sont constitués par des crochets (100, 142) ou des ergots pouvant être insérés dans des évidements (74, 104; 138) prévus sur la moissonneuse-batteuse et par des broches de verrouillage (84) soumises à l'action d'un ressort, qui peuvent être amenées automatiquement dans une position de verrouillage dans la position de fin de course du support (94).

3. Dispositif suivant les revendications 1 et 2, caractérisé en ce qu'un dispositif de recouvrement (160) est constitué par un fond (162) prévu au-dessous de l'extrémité arrière du secoueur à éléments multiples (16) et muni de brides ou d'ailes (166) dirigées verticalement, qui sont disposées de telle sorte que l'extrémité arrière du détecteur (50) associé au secoueur à éléments multiples (16) soit protégée contre les endommagements, le fond (162) étant muni d'une dépression (168) pour la réception du conducteur (58) reliant le détecteur (50) au dispositif indicateur (56), le dispositif de recouvrement (160) pouvant être raccordé au secoueur à éléments multiples par des éléments de fixation (172) pouvant être dégagés manuellement.

4. Dispositif suivant l'une quelconque des revendications précédentes, caractérisé en ce qu'il est prévu sur le support (94), au-dessus et à côté du détecteur (52), des éléments de guidage (110) dirigés verticalement, qui amènent au détecteur (52) les produits de récolte éjectés et formant la perte, et en ce qu'il est prévu, au-dessus du détecteur (52), un dispositif de protection en forme de grille (grille 116) qui empêche la paille et les balles de parvenir sur le détecteur (52).

5. Dispositif suivant une ou plusieurs des revendications précédentes, caractérisé en ce que chaque détecteur (50, 52) comporte un branchement électrique ou une borne (126) qui peut être accouplé à un élément de raccordement électrique (128, 152) prévu à l'extrémité de sortie du secoueur à éléments multiples (16) ou bien du crible (24) de l'ensemble de nettoyage, cet élément de raccordement étant relié par le conducteur électrique (58, 60) au dispositif indicateur (56).

6. Dispositif suivant une ou plusieurrs des revendications précédentes, caractérisé en ce que le détecteur (50) est disposé sur le fond incliné vers l'arrière, et en ce que le crochet (142) se trouve à la partie supérieure du support (140), tandis que le branchement électrique (126) se trouve à sa partie inférieure, ce branchement (126) pouvant être accouplé automatiquement, lors de l'opération de basculement vers l'intérieur du support (140), avec l'élément de raccordement agencé sous forme d'élément complémentaire, en venant occuper alors une position orientée en principe horizontalement.

7. Dispositif suivant une ou plusieurs des revendications précédentes, caractérisé en ce qu'il est prévu sur le dispositif (160) servant à recouvrir le câble électrique (58), une bride (166) recouvrant le côté arrière du détecteur (50).

8. Dispositif suivant une ou plusieurs des revendications précédentes, caractérisé en ce que le bec ou ergot (100) disposé à la partie supérieure du support (94) peut être inséré dans un évidement (74) prévu sur le crible (24) et porte le support lors du basculement d'une position de montage jusque dans une position de travail, tandis que la broche de verrouillage (84) soumise à l'action d'un ressort est montée de façon coulissante dans des œilletons (80) et peut être amenée automatiquement dans sa position de verrouillage lors du basculement vers l'intérieur.

9. Dispositif suivant une ou plusieurs des revendications précédentes, caractérisé en ce qu'il est prévu sur le support (140) un élément d'accouplement ou un ergot faisant saillie vers l'avant, qui lors du montage du support (140) peut être assemblé avec une pièce complémentaire.

10. Dispositif suivant une ou plusieurs des revendications précédentes, caractérisé en ce que le support (94, 140) comporte une aile (96) s'étendant en principe verticalement, sur laquelle l'aile (106) inclinée vers l'arrière et servant au montage du détecteur (50, 52) est supportée en porte à faux, en chevauchant ou recouvrant la totalité de la largeur du détecteur.

11. Dispositif suivant les revendications 4 et 9, caractérisé en ce que le dispositif de protection en forme de grille (grille 116) recouvre l'espace situé entre l'aile verticale (96) et la limite extérieure du détecteur (50, 52).

12. Dispositif suivant une ou plusieurs des revendications précédentes, caractérisé en ce que l'ensemble de nettoyage (26) comporte chaque fois un détecteur (52) au voisinage de la paroi latérale (64) du crible (24).

13. Dispositif suivant une ou plusieurs des revendications précédentes, caractérisé en ce que l'évidement servant à la réception de la broche de verrouillage (84) se présente sous la forme d'une fente (104) qui est ménagée dans des ailes opposées orientées verticalement (102) du support (94), les ailes s'appliquant latéralement, dans la position de travail, contre les œilletons (80) recevant la broche de verrouillage (84).

FIG. 1

FIG. 3

# FIG. 2

# FIG. 4

FIG. 5

FIG. 6

FIG. 7